# EUROPÄISCHE PATENTSCHRIFT

(11) **EP 4 160 029 B1**
(45) Veröffentlichungstag und Bekanntmachung des Hinweises auf die Patenterteilung: **03.07.2024**
(21) Anmeldenummer: 21200632.4
(22) Anmeldetag: 04.10.2021
(51) Int. Cl.: H05H 7/00, F16C 33/58, F16C 19/06, F16C 33/60, G02B 5/00, F16C 37/00

(54) **VORRICHTUNG MIT EINER EINSTELLBAREN ZENTRALÖFFNUNG**
DEVICE WITH AN ADJUSTABLE CENTRAL OPENING
DISPOSITIF DOTÉ D'UNE OUVERTURE CENTRALE RÉGLABLE

(43) Veröffentlichungstag der Anmeldung: 05.04.2023
(73) Patentinhaber: Deutsches Elektronen-Synchrotron DESY, 22607 Hamburg (DE)
(72) Erfinder: Müller, Frieder, 15738 Zeuthen (DE); Philipp, Sebastian, 15738 Zeuthen (DE)

(56) Entgegenhaltungen:
- EP-A2- 2 236 911
- US-A- 2 695 547
- US-A1- 2014 061 467

## Beschreibung

Die vorliegende Erfindung betrifft eine Vorrichtung mit einer einstellbaren Zentralöffnung.

Derartige Vorrichtungen sind beispielsweise als Iris-Mechanismus oder Irisblende bekannt. Weiterhin betrifft die Erfindung die Verwendung einer derartigen Vorrichtung.

Solch eine Vorrichtung ist zum Beispiel aus dem Dokument US2695547A bekannt.

In Teilchenbeschleunigern verursachen verschiedene Effekte unerwünschte Strahlungsanteile, die den eigentlichen Teilchenstrahl umgeben. Diese unerwünschten Strahlungsanteile können beispielsweise durch verschiedenste Anordnungen von Blenden verringert werden. Die Blendenanordnungen weisen in der Regel eine oder mehrere Öffnungen auf, die den eigentlichen Teilchenstrahl durchlassen, und einen oder mehrere Blendenkörper bzw. -lamellen, die die den Teilchenstrahl umgebenden Strahlungsanteile zumindest teilweise absorbieren. Aus dem Stand der Technik sind verschiedenste Blendenanordnungen wie beispielsweise Schlitz- oder Irisblenden bekannt, die insbesondere in der Optik Anwendung finden.

Bekannte Blendenanordnungen können jedoch nicht ohne weiteres in Teilchenbeschleunigern verwendet werden, da sie den extremen Umgebungsbedingungen und den daraus resultierenden Materialanforderungen nicht genügen, die der Einbau einer Blendenanordnung in einer Beschleunigerkavität mit sich bringt. Beispielsweise herrscht in den Beschleunigerkavitäten oftmals ein Ultrahochvakuum von weniger als 5·10⁻¹⁰ mbar, was besonders hohe Anforderungen an das Material hinsichtlich bei entsprechenden Drücken und auch beim Ausheizen bei Ausheiztemperaturen von mehr als 200°C mit sich bringt. Zudem verbietet sich im UHV die Verwendung von Schmierstoffen. Darüber hinaus sind die Blendenanordnungen hohen Strahlungsdosen ausgesetzt und müssen entsprechend strahlungsbeständig sein. Schließlich ist in vielen Beschleunigerkavitäten der zur Verfügung stehende Platz äußerst begrenzt, so dass die Blendenanordnungen auch unter diesen Gesichtspunkten weiteren Beschränkungen unterworfen sind.

Vor diesem Hintergrund ist es eine Aufgabe der vorliegenden Erfindung, eine Vorrichtung mit einer Zentralöffnung und die Verwendung der Vorrichtung anzugeben, die insbesondere als Blendenanordnung im UHV verwendet werden kann.

Die Aufgabe wird gelöst durch eine Vorrichtung nach Anspruch 1 sowie eine Verwendung einer derartigen Vorrichtung gemäß Anspruch 13. Bevorzugte Ausgestaltungen der Vorrichtung und der Verwendung derselben sind Gegenstand der abhängigen Ansprüche.

In einem ersten Aspekt wird die der Erfindung zugrundeliegende Aufgabe durch eine Vorrichtung mit einer einstellbaren Zentralöffnung gelöst. Die Vorrichtung umfasst einen äußeren Ring und einen inneren Ring. Der innere Ring ist über ein Wälzlager drehbar in dem äußeren Ring gehaltert. Die Vorrichtung umfasst zumindest zwei Lamellen, die jeweils über ein äußeres Festkörpergelenk mit dem äußeren Ring verbunden sind und jeweils über ein inneres Festkörpergelenk mit dem inneren Ring verbunden sind. Die Vorrichtung ist weiter so ausgebildet, dass die Zentralöffnung durch eine Drehung des inneren Rings und des äußeren Rings relativ zueinander eingestellt wird, wobei durch die Drehung die äußeren Festkörpergelenke und die inneren Festkörpergelenke elastisch verformt werden und durch die Verformung der inneren und äußeren Festkörpergelenke die Lamellen in die Zentralöffnung hinein bzw. aus der Zentralöffnung heraus bewegt werden, wodurch die Zentralöffnung eingestellt wird.

Mit anderen Worten umfasst die Vorrichtung eine Zentralöffnung, deren Abmessungen oder Größe oder Durchmesser eingestellt werden kann, so dass bei einer Verwendung der Vorrichtung als Blende in einem Teilchenbeschleuniger beispielsweise der Querschnitt des durch die Zentralöffnung durchgelassenen Strahls beschränkt werden kann. Vorliegend wird die Öffnung der Vorrichtung als Zentralöffnung bezeichnet, da sie von einem inneren und einem äußeren Ring umgeben ist, sich also in diesem Sinne zentral innerhalb der beiden Ringe befindet und insbesondere innerhalb des inneren Ringes angeordnet ist.

Der innere und der äußere Ring sind über ein Wälzlager miteinander verbunden, das den Reibungswiderstand zwischen den beiden Ringen verringert, so dass diese gegeneinander verdreht werden können, wobei die Drehung relativ zueinander um eine gemeinsame Drehachse erfolgt. Insbesondere kann bei einem ortsfest angeordneten äußeren Ring der innere Ring relativ zu diesem verdreht werden. Als Wälzlagern können beispielsweise Kugellager, Zylinderrollenlager, Nadellager, Kegelrollenlager, Tonnenlager und Toroidalrollenlager verwendet werden, die keine Schmierstoffe benötigen und daher für eine Verwendung im UHV, d.h., bei Drücken von weniger als 5·10⁻¹⁰ mbar geeignet sind, sofern die Vorrichtung im UHV verwendet werden soll.

Die Vorrichtung umfasst weiterhin zwei oder mehr Lamellen, mit denen die Zentralöffnung, d.h., der freie Bereich in der Mitte der Vorrichtung eingestellt wird, indem die Lamellen in die Öffnung hinein bzw. wieder aus dieser heraus bewegt werden. Die Lamellen können gegebenenfalls auch als Blendenkörper bezeichnet werden. Jede der zwei oder mehr Lamellen ist über ein erstes oder äußeres Festkörpergelenk mit dem äußeren Ring verbunden und mit einem zweiten oder inneren Festkörpergelenk mit dem inneren Ring verbunden, d.h., für jede der zwei oder mehr Lamellen ist ein äußeres und ein inneres Festköpergelenk vorgesehen, welches die Lamelle jeweils mit einem der beiden Ringe verbindet. Lamellen und Festkörpergelenke sind so ausgebildet und an dem äußeren Ring bzw. inneren Ring angeordnet, dass durch eine Verdrehung des inneren Rings relativ zu dem äußeren Ring die Festkörpergelenke verformt und die Lamellen in die Zentralöffnung hinein bzw. aus dieser heraus bewegt werden.

Beispielsweise umfasst jedes Festkörpergelenk ein erstes und ein zweites Ende, wobei das erste Ende mit dem äußeren bzw. inneren Ring verbunden ist und das zweite Ende mit einer Lamelle verbunden ist. Eine Lamelle hält damit den Abstand zwischen den jeweiligen zweiten Enden der inneren und äußeren Festkörpergelenke konstant, die mit der Lamelle verbunden sind. Werden der innere und der äußere Ring gegeneinander verdreht, sodass sich der Abstand zwischen den jeweiligen ersten Enden der beiden Festkörpergelenke ändert, die mit der gleichen Lamelle verbunden sind, wird die Lamelle in die Zentralöffnung hinein bzw. aus dieser wieder heraus bewegt. Eine Hineinbewegung in die Zentralöffnung und damit eine Verkleinerung derselben findet dabei in der Regel statt, wenn der Abstand zwischen den ersten Enden der beiden Festkörpergelenke, die mit der gleichen Lamelle verbunden sind, größer wird. Umgekehrt findet eine Herausbewegung aus der Zentralöffnung statt, wenn der Abstand zwischen den beiden ersten Enden der Festkörpergelenke, die mit der gleichen Lamelle verbunden sind, kleiner wird. Durch die Herausbewegung der Lamelle aus der Zentralöffnung wird diese vergrößert.

Die vorliegende Vorrichtung stellt somit auf vorteilhafte Weise eine Zentralöffnung mit veränderbaren Abmessungen bereit, die besonders kompakt ist und zudem aufgrund des Wälzlagers zwischen dem inneren und dem äußeren Ring sowie der Festkörpergelenke zur Befestigung der Lamellen an dem äußeren und dem inneren Ring reibungsarm ausgestaltet ist. So kann bei geeigneter Wahl der Werkstoffpaarung zwischen äußerem- bzw. innerem Ring einerseits und der Wälzkörper andererseits auf den Einsatz von Schmierstoffen vollständig verzichtet werden, wodurch die Vorrichtung auch für eine Verwendung im UHV geeignet ist.

Auch besteht durch den gewählten Aufbau keine Gefahr des Kaltverschweißens zwischen verschiedenen Komponenten der Vorrichtung und die Erzeugung von Partikeln wird minimiert, da es zwischen keiner der Komponenten der Vorrichtung zu Gleitreibung kommt.

In einer bevorzugten Ausführungsform wird der äußere Ring von einem ersten und einem zweiten Ringelement gebildet, wobei zwischen dem ersten Ringelement und dem zweiten Ringelement eine äußere Führung des Wälzlagers ausgebildet ist. Eine innere Führung des Wälzlagers ist an einer Oberfläche des inneren Rings ausgebildet. Eine Mehrzahl von Wälzkörpern des Wälzlagers werden zwischen der äußeren Führung und der inneren Führung gehalten.

Mit anderen Worten ist der äußere Ring nicht notwendigerweise einstückig ausgebildet, sondern bevorzugt aus zwei Ringelementen zusammengesetzt, die sich jeweils in Ebenen erstrecken, die senkrecht zur Drehachse, um die die beiden Ringe relativ zueinander verdreht werden können, und parallel zueinander verlaufen. Diese beiden Ringelemente bilden zusammen die äußere Führung des Wälzlagers, beispielsweise in Form einer Nut, in der die Wälzkörper des Wälzlagers geführt und damit gehalten werden. Durch die zweiteilige Ausgestaltung des äußeren Rings und insbesondere der in diesem gebildeten äußeren Führung des Wälzlagers wird der Zusammenbau, d.h., die Montage, der Vorrichtung erleichtert, da die Wälzkörper zunächst in eine der beiden Hälften der Führung eingesetzt werden können. Jedes der beiden Ringelemente kann zudem aus mehreren Einzelelementen zusammengesetzt sein.

Die innere Führung des Wälzlagers wird von einer Oberfläche des inneren Rings gebildet, die auch aus mehreren Oberflächen zusammengesetzt sein kann, wenn beispielweise der innere Ring mehrteilig ist. So kann auch der innere Ring zum Beispiel zwei Elemente aufweisen, zwischen denen einen Nut gebildet ist, in der die Wälzkörper des Wälzlagers laufen, also senkrecht zur Umfangsrichtung des inneren Rings zwei parallel zueinander angeordnete Elemente aufweisen. Die Nut bildet in diesen Fall die innere Führung für die Wälzkörper, die zwischen der inneren und der äußeren Führung gehalten oder gelagert werden. Auch der innere Ring kann mehrere Einzelelemente umfassen.

In einer beispielhaften, bevorzugten Ausführungsform ist ein Lagerkäfig für die Mehrzahl von Wälzkörpern zwischen der inneren Führung und der äußeren Führung angeordnet, der aus einem anderen UHV-tauglichen Material als die Wälzkörper gebildet ist. Beispielsweise kann der Lagerkäfig aus Polyetheretherketon (PEEK), Aluminium, Bronze gebildet sein.

In einer bevorzugten Ausführungsform umfasst die Vorrichtung vier Lamellen, wobei eine erste und eine zweite Lamelle der vier Lamellen jeweils über das äußere Festkörpergelenk auf einer ersten Seite mit dem äußeren Ring verbunden sind und wobei eine dritte und eine vierte Lamelle der vier Lamellen jeweils über das äußere Festkörpergelenk auf einer zweiten Seite mit dem äußeren Ring verbunden sind, wobei die erste Seite des äußeren Rings der zweiten Seite des äußeren Rings gegenüber liegt. Auf vorteilhafte Weise sind somit vier oder mehr Lamellen vorgesehen, die in die Zentralöffnung hinein oder wieder aus dieser heraus bewegt werden können, um die Abmessungen derselben zu verändern. Dabei ist jede der Lamellen über ein nur der jeweiligen Lamelle zugeordnetes inneres Festkörpergelenk mit dem inneren Ring verbunden und über ein nur der jeweiligen Lamelle zugeordnetes äußeres Festkörpergelenk mit dem äußeren Ring verbunden. Jeweils zwei der vier Lamellen sind auf unterschiedlichen, einander gegenüberliegenden Seiten der Vorrichtung angeordnet. Sofern der äußere Ring aus zwei Ringelementen gebildet ist, können beispielsweise zwei Lamellen über ihre jeweiligen äußeren Festkörpergelenke an einem Ringelement angeordnet sein und die beide anderen Lamellen über ihre jeweiligen äußeren Festkörpergelenke an dem anderen Ringelement angeordnet sein. Die Lamellen sind an den gegenüberliegenden Seiten vorzugsweise um 90° versetzt angeordnet, so dass ein möglichst gleichmäßiges und überlappendes Öffnen und Verschließen der zentralen Öffnung erreicht wird.

Es ist weiterhin bevorzugt, wenn die Lamellen drehfest mit den jeweiligen inneren und äußeren Festkörpergelenken verbunden sind. Eine drehfeste Verbindung kann beispielsweise erreicht werden, in dem die Lamellen jeweils mit zwei oder mehr Schrauben oder Nieten mit dem Festkörpergelenken verbunden sind. Durch die drehfeste Verbindung wird auf vorteilhafte Weise Gleitreibung zwischen den Festkörpergelenken und den Lamellen vermieden, damit der Erzeugung von im UHV unerwünschten Partikeln vorgebeugt und die Funktion des Festkörpergelenkes überhaupt erst gewährleistet.

In einer beispielhaften Ausführungsform sind die inneren und/oder die äußeren Festkörpergelenke als Blattfedern bzw. Biegefedern ausgebildet. Vorzugsweise sind die Festkörpergelenke dabei aus einer Titanlegierung, aus einer elastischen Bronzeverbindung oder Federstahl gebildet.

In einer bevorzugten Ausführungsform umfasst die Vorrichtung einen Antrieb, der dazu konfiguriert ist, den inneren Rings relativ zu dem äußeren Ring oder umgekehrt zu drehen. In einer besonders bevorzugten Ausführungsform ist der Antrieb ein Linearantrieb, wobei die Drehung des inneren Rings und des äußeren Rings relativ zueinander durch eine Längenänderung des Linearantrieb erzeugt wird und der Linearantrieb vorzugsweise an dem inneren Ring angreift. Alternativ kann der Antrieb beispielsweise auch als Schneckenrad, Seilzug, Piezoantrieb oder (Elektro-)Magnet-Direktantrieb ausgebildet sein.

Es ist weiterein bevorzugt, dass die inneren und äußeren Festkörpergelenke so ausgebildet sind, dass die Festkörpergelenke bei elastischer Verformung durch Drehung des äußeren Rings und des inneren Rings relativ zueinander zur Änderung der Zentralöffnung als Rückstellfeder wirken, so dass die inneren und äußeren Festkörpergelenke stets darauf hinwirken, dass der innere Ring und der äußere Ring durch eine Rückstellkraft der von den Festkörpergelenken gebildeten Rückstellfeder relativ zueinander in eine Ausgangsorientierung gedreht werden. So werden auf vorteilhafte Weise der innere und der äußere Ring stets wieder in ihre Ausgangsorientierung zueinander gedreht, die insbesondere einer definierten Ausgangsgröße der Zentralöffnung entspricht. Dabei ist es besonders bevorzugt, wenn die Zentralöffnung in der Ausgangsorientierung maximal geöffnet oder maximal geschlossen ist.

In einer bevorzugten Ausführungsform ist der Antrieb so ausgebildet, dass der Antrieb ausschließlich die Drehung des inneren Rings und des äußeren Rings relativ zueinander entgegen der Rückstellkraft der von der von den Festkörpergelenken gebildeten Rückstellfeder bewirkt und die Drehung des inneren Rings und des äußeren Rings relativ zueinander im Übrigen alleine durch die Rückstellkraft der von den Festkörpergelenken gebildeten Rückstellfeder bewirkt wird. Auf diese Weise kann ein besonders kompakter und wartungsarmer Antrieb verwendet werden, was insbesondere bei einer Verwendung im UHV oder in räumlich eingeschränkten Umgebungen von Vorteil ist.

Es ist bevorzugt, wenn die Lamellen aus einem Schwermetall gebildet sind, wobei das Schwermetall vorzugsweise Wolfram oder eine Wolframlegierung mit einem Wolframanteil von 95% oder mehr ist.

In einer weiter bevorzugten Ausführungsform sind die inneren Festkörpergelenke einstückig mit dem inneren Ring ausgebildet und/oder die äußeren Festkörpergelenke einstückig mit dem äußeren Ring ausgebildet. Durch die einstückige Form wird eine mechanisch kompliziertere Fixierung der Festkörpergelenke an dem jeweiligen Ring vermieden, eine ungewünschte Relativbewegung zwischen Festkörpergelenken und dem jeweiligen Ring verhindert und eine wesentlich kompaktere Bauweise erreicht.

Es ist weiter bevorzugt, auf einer oder mehreren der Lamellen Kühlelemente anzuordnen, um von absorbierter Strahlung erzeugte Wärme abzuführen. Vorzugsweise werden die Kühlelemente insbesondere bei Verwendung der Vorrichtung in einem Teilchenbeschleuniger auf den Lamellen angeordnet, die von dem Teilchenstrahl als erste getroffen werden und die damit der höchsten Strahlungsleistung ausgesetzt sind.

Es ist weiter bevorzugt, die Vorrichtung so zu konfigurieren, dass die Zentralöffnung stufenlos einstellbar ist.

In einem zweiten Aspekt wird die der Erfindung zugrundeliegende Aufgabe durch die Verwendung einer Vorrichtung gemäß einer der beschriebenen Ausführungsformen im Ultrahochvakuum, UHV, und/oder in einer partikelarmen Umgebung wie beispielsweise einem Reinraum gelöst. Alternativ oder ergänzend kann die Vorrichtung auch als optische Apertur oder zu einer Begrenzung eines Querschnitts eines Elektronenstrahls, eines Röntgenstrahls oder eines anderen Teilchenstrahls verwendet werden.

Die Vorteile der Verwendung eines solchen Vorrichtung entsprechen den Vorteilen der jeweiligen Ausführungsform der Vorrichtung.

Alternativ kann die Vorrichtung auch als Greifwerkzeug verwendet werden, wobei die Lamellen mit einem zu greifenden Objekt durch Drehung des inneren und des äußeren Rings relativ zueinander in Eingriff gebracht werden, um dieses zu ergreifen. Dies bringt insbesondere im UHV oder einer partikelarmen Umgebung die bereits beschriebenen Vorteile mit sich.

Nachfolgend wird ein Ausführungsbeispiel einer Vorrichtung mit einer Zentralöffnung bezugnehmend auf die Zeichnung näher beschrieben, darin zeigt
- Figur 1a: eine perspektivische Ansicht eines Ausführungsbeispiel einer Vorrichtung mit einer Zentralöffnung,
- Figur 1b: eine perspektivische Schnittansicht der Vorrichtung aus Figur 1a,
- Figur 2a: eine perspektivische Ansicht der Vorrichtung aus Figur 1a ohne Kühlelemente,
- Figur 2b: eine perspektivische Schnittansicht der Vorrichtung aus Figur 2a,
- Figur 3: eine seitliche Ansicht eines Ringelements eines äußeren Rings, das Teil der Vorrichtung aus Figur 1a und 2a ist,
- Figur 4: eine seitliche Ansicht eines inneren Rings der Vorrichtung aus Figur 1a und 2a,
- Figur 5: eine seitliche Ansicht auf die Vorrichtung aus Figur 1a,
- Figur 6: ein Schnittansicht durch die Vorrichtung aus Figur 5 entlang der Linie A-A.

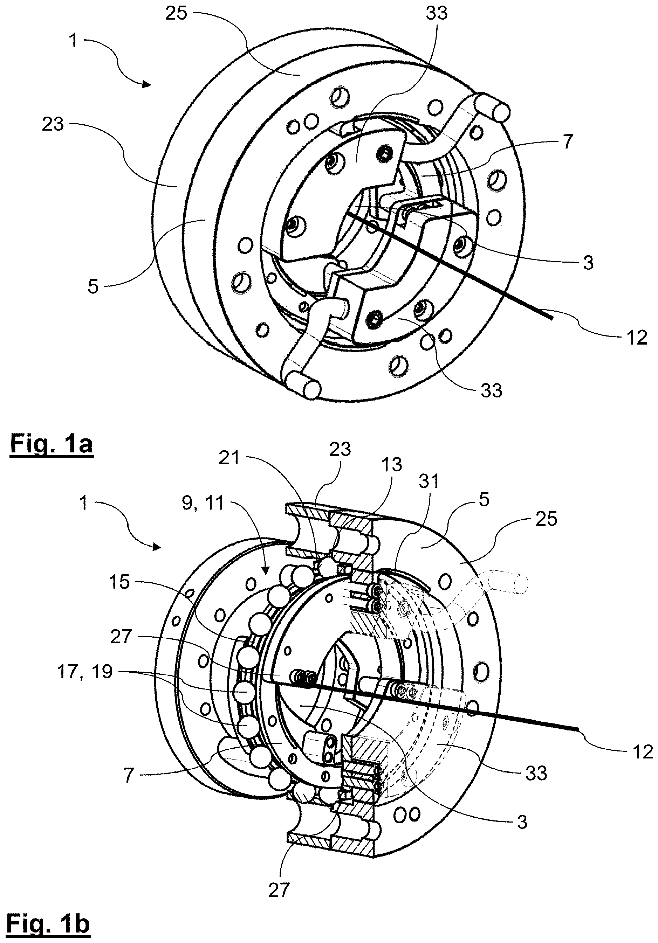

Nachfolgend wird bezugnehmend auf die Figuren 1a bis 6 ein Ausführungsbeispiel einer Vorrichtung 1 mit einer einstellbaren Zentralöffnung 3 näher erläutert. Die Vorrichtung 1 umfasst einen äußeren Ring 5 und einen inneren Ring 7, der innerhalb des äußeren Rings 5 angeordnet ist. Beide Ringe 5, 7 umgeben die Zentralöffnung 3.

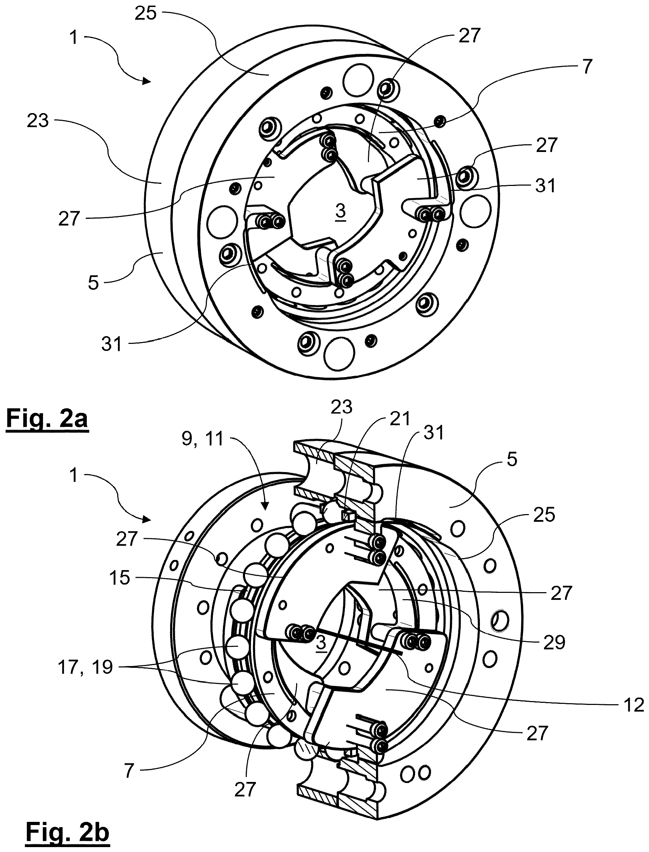

Der innere Ring 7 ist über ein Wälzlager 9 in Form eines Kugellagers 11 um eine Drehachse 12 drehbar im äußeren Ring 5 gehaltert. Das Wälzlager 9 ist lediglich in den Figuren 1b, 2b und 6 zu erkennen und umfasst eine äußere Führung 13, die im äußeren Ring 5 ausgebildet ist, eine innere Führung 15, die im inneren Ring 7 ausgebildet ist, Wälzkörper 17 in Form von Kugeln 19 sowie einen Lagerkäfig 21. Von den Wälzkörper 17 sind in den Figuren 1b und 2b nur zwei mit Bezugszeichen versehen, um die Figuren nicht zu überfrachten. Der Lagerkäfig 21 ist in dem Ausführungsbeispiels aus PEEK gebildet, dass auf vorteilhafte Weise strahlungsbeständig und UHV-geeignet ist, da PEEK insbesondere nicht zum Ausgasen neigt.

Die innere Führung 15 wird von einer Nut gebildet, die außen um den inneren Ring 7 in Umfangsrichtung herum verläuft. Die äußere Führung wird ebenfalls von einer Nut gebildet, die in dem in den Figuren gezeigten Ausführungsbeispiel zwischen zwei Ringelementen 23, 25 ausgebildet ist, die zusammen den äußeren Ring 5 bilden. Den äußeren Ring 5 aus zwei Ringelementen 23, 25 zusammenzusetzen erleichtert den Zusammenbau der Vorrichtung 1, da die Wälzkörper 17 zusammen mit dem Lagerkäfer 21 zunächst in der inneren Führung 15 im inneren Ring 5 eingesetzt werden können. Im Anschluss werden die Ringelemente 23, 25 zum äußeren Ring 5 zusammengesetzt und mit Verbindungsmittel wie beispielsweise Schrauben verbunden. Durch das Zusammensetzen der Ringelemente 23, 25 entsteht die äußerer Führung 13, in der die Wälzkörper 17 ebenfalls geführt werden und das Wälzlager 9 wird vervollständigt. Zudem erlaubt die geteilte Ausführung des äußeren Ringes 5 das Einstellen des Lagerspiels.

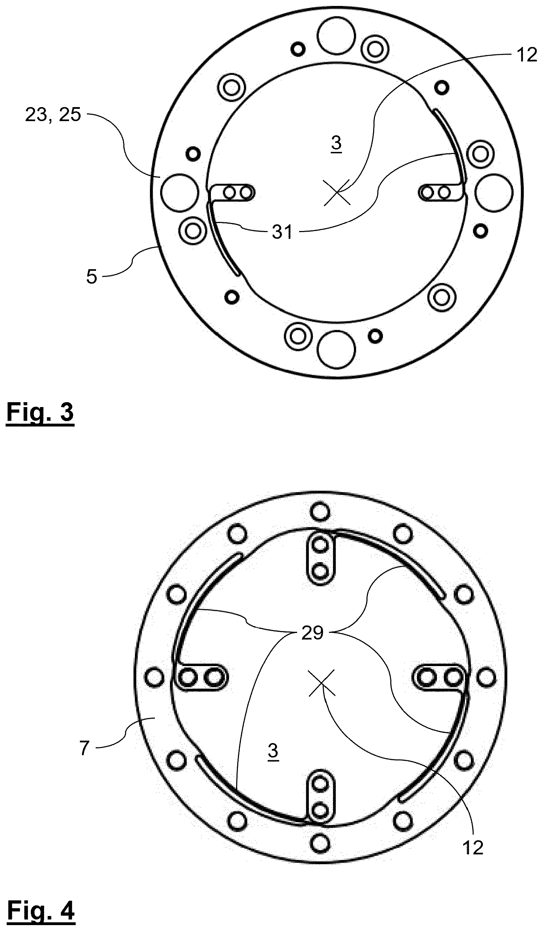

Die Vorrichtung 1 umfasst weiterhin vier Lamellen 27. Jede Lamelle 27 ist über ein inneres Festkörpergelenk 29 mit dem inneren Ring 7 verbunden und über ein äußeres Festkörperelement 31 mit dem äußeren Ring 5 bzw. konkret mit einem der beiden Ringelement 23, 25 verbunden. Die inneren Festkörpergelenke 29 sind, wie man insbesondere in Figur 4 deutlich erkennen kann, einstückig mit dem inneren Ring 7 ausgebildet, während die äußeren Festkörpergelenke 31 einstückig mit dem jeweiligen Ringelement 23, 25 ausgebildet sind, mit dem sie die entsprechende Lamelle 27 verbinden. Die äußeren Festkörpergelenke sind insbesondere in den Figuren 1b, 2a, 2b und 3 gut zu erkennen. Um die Figuren nicht mit Bezugszeichen zu überfrachten und die Erkennbarkeit von Details zu erhalten, sind in einigen Figuren nicht alle dargestellten Lamellen 27 und Festkörpergelenke 29, 31 mit Bezugszeichen versehen worden. Zudem ist die Darstellung in den Figuren 3 und 4 ausdrücklich nicht maßstabsgetreu relativ zu einander.

Jeweils zwei der Lamellen 27 sind dabei über ihre jeweiligen äußeren Festkörpergelenke 31 mit einem der beiden Ringelemente 23, 25 verbunden, die zusammen den äußeren Ring 5 bilden. Daher sind jeweils zwei Lamellen 27 in einer Ebene angeordnet und die beiden anderen Lamellen 27 in einer zweiten Ebene angeordnet. Die beiden Ebenen erstrecken sich parallel zueinander und jeweils senkrecht zur Drehachse 12, um die der innere Ringe 7 relativ zum äußeren Ring 5 verdreht werden kann.

Die Festkörpergelenke 29, 31 sind als Biegefedern geformt und aus einer hochelastischen Titanlegierung. Die Verbindung zu den Lamellen 27 erfolgt jeweils über zwei Verbindungsmittel (ohne Bezugszeichen), um eine Drehung zwischen den Lamellen 27 und den Festkörpergelenken 29, 31 und die damit verbundene Verdrehung zu verhindern. So wird auf vorteilhafte Weise die Bildung von Partikeln verhindert. Die Verbindungsmittel sind vorzugsweise aus rostfreiem Stahl, damit ein Kaltverschweißen zu vermeiden.

Die Lamellen 27 sind in dem in den Figuren gezeigten Ausführungsbeispiel aus einer bearbeitbaren Wolframlegierung mit einem Wolframanteil von mindestens 95% gebildet, um die einen Teilchenstrahl umgebende unerwünschte Strahlung zu absorbieren. Sie können durch eine Drehung des inneren Rings 7 relativ zu dem äußeren 5 in die Zentralöffnung 3 hinein bzw. aus dieser wieder heraus bewegt werden, so dass durch eine Drehung der Ringe 5, 7 zueinander die Abmessungen der Zentralöffnung 3 der Vorrichtung 1 eingestellt werden können. Da die Vorrichtung 1 so ausgestaltet ist, dass bei einer Drehung des inneren Rings 7 relativ zum äußeren Ring 5 keine Gleitreibung auftritt, ist die Vorrichtung 1 auf vorteilhafte Weise sowohl im UHV als auch in anderen partikelarmen Umgebungen wie beispielsweise Reinräumen verwendbar. Die Vorrichtung 1 kann dabei als Blende für Strahlung im optischen Wellenlängenbereich verwendet werden, ist aber insbesondere auch als Verwendung als Blende für Röntgenstrahlung oder Teilchenstrahlen, wie beispielsweise Elektronen- oder Ionenstrahlen verwendbar. Daneben kann die Vorrichtung 1 auch als Greifer verwendet werden.

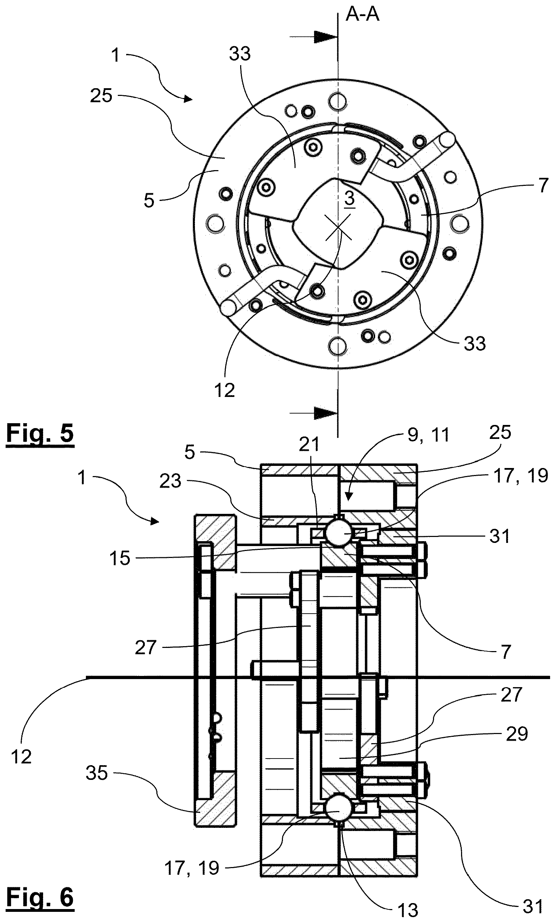

Insbesondere bei einer Verwendung der Vorrichtung als Blende für Teilchen- oder Röntgenstrahlung kann es zu einem erheblichen Energieeintrag durch die absorbierte Strahlung kommen. Um die Energie abzuführen, können in den Figuren 1a, 1b und 5 gezeigte Kühlelemente 33 verwendet werden, die insbesondere auf den Lamellen 27 angeordnet werden, auf die der Teilchen- oder Röntgenstrahl als erstes trifft. Die Kühlelemente 33 werden vorzugsweise auf der Seite der Lamellen 27, die bei einer Verwendung der Vorrichtung 1 als Blende auch als Blendenelemente 27 bezeichnet werden können, angeordnet, die von dem inneren Ring 7 weg weist.

Schließlich umfasst die Vorrichtung 1 noch über einen Antriebsvorsprung 35, der mit dem inneren Ring 7 verbunden ist. In dem in den Figuren dargestellten Ausführungsbeispiel ist der Antriebsvorsprung 35 mit dem inneren Ring 7 verschraubt. Am Antriebsvorsprung 35 kann beispielsweise ein Linearantrieb (nicht dargestellt) angreifen, mit dem der innere Ring 7 relativ zum äußeren Ring 5 verdreht werden kann, um die Zentralöffnung 3 zu schließen. In dem Ausführungsbeispiel ist der Linearantrieb dabei so ausgestaltet, dass er lediglich zum Schließen der Zentralöffnung 3 verwendet wird. Da das Verdrehen jedoch gegen die Rückstellkraft der aus den Festkörpergelenken 29, 31 gebildenden Blattfedern erfolgt, drehen diese den inneren Ring 7 relativ zum äußeren Ring 5 stets wieder in die Ausgangsstellung, in der die Zentralöffnung 3 auf vorteilhafte Weise vollständig geöffnet ist.

### Bezugszeichenliste

- 1: Vorrichtung mit einer Zentralöffnung
- 3: Zentralöffnung
- 5: äußerer Ring
- 7: innerer Ring
- 9: Wälzlager
- 11: Kugellager
- 12: Drehachse
- 13: äußere Führung
- 15: innere Führung
- 17: Wälzkörper
- 19: Kugeln
- 21: Lagerkäfig
- 23: Ringelement
- 25: Ringelement
- 27: Lamelle
- 29: inneres Festkörpergelenk
- 31: äußeres Festkörpergelenk
- 33: Kühlelemente
- 35: Antriebsvorsprung

## Patentansprüche

1. Eine Vorrichtung (1) mit einer einstellbaren Zentralöffnung (3), wobei die Vorrichtung (1) einen äußeren Ring (5) und einen inneren Ring (7) umfasst, wobei der innere Ring (7) über ein Wälzlager (9) drehbar in dem äußeren Ring (5) gehaltert ist,
wobei die Vorrichtung (1) zumindest zwei Lamellen (27) umfasst, die jeweils über ein äußeres Festkörpergelenk (31) mit dem äußeren Ring (5) verbunden sind und jeweils über ein inneres Festkörpergelenk (29) mit dem inneren Ring (7) verbunden sind,
wobei die Vorrichtung (1) so ausgebildet ist, dass die Zentralöffnung (3) durch eine Drehung des inneren Rings (7) und des äußeren Rings (5) relativ zueinander eingestellt wird, **dadurch gekennzeichnet, dass** durch die Drehung die äußeren Festkörpergelenke (31) und die inneren Festkörpergelenke (29) elastisch verformt werden und durch die Verformung der inneren und äußeren Festkörpergelenke (29, 31) die Lamellen (27) in die Zentralöffnung (3) hinein bzw. aus der Zentralöffnung (3) heraus bewegt werden, wodurch die Zentralöffnung (3) eingestellt wird.

2. Vorrichtung (1) nach Anspruch 1, wobei der äußere Ring (5) von einem ersten und einem zweiten Ringelement (23, 35) gebildet wird, wobei zwischen dem ersten Ringelement (23) und dem zweiten Ringelement (25) eine äußere Führung (13) des Wälzlagers (9) ausgebildet ist, wobei eine innere Führung (15) des Wälzlagers (9) an einer Oberfläche des inneren Rings (7) ausgebildet ist und wobei eine Mehrzahl von Wälzkörpern (17) des Wälzlagers (9) zwischen der äußeren Führung (13) und der inneren Führung (15) gehalten werden,
wobei vorzugsweise ein Lagerkäfig (21) für die Mehrzahl von Wälzkörpern (17) zwischen der inneren Führung (15) und der äußeren Führung (17) angeordnet ist, wobei der Lagerkäfig (21) vorzugsweise aus Polyetheretherketon, PEEK, gebildet ist.

3. Vorrichtung (1) nach Anspruch 1 oder 2, wobei die Vorrichtung (1) vier Lamellen (27) umfasst, wobei eine erste und eine zweite Lamelle (27) der vier Lamellen (27) jeweils über das äußere Festkörpergelenk (31) auf einer ersten Seite mit dem äußeren Ring (5) verbunden sind und wobei eine dritte und eine vierte Lamelle (27) der vier Lamellen (27) jeweils über das äußere Festkörpergelenk (31) auf einer zweiten Seite mit dem äußeren Ring (5) verbunden sind, wobei die erste Seite des äußeren Rings (5) der zweiten Seite des äußeren Rings (5) gegenüber liegt.

4. Vorrichtung (1) nach einem der vorhergehenden Ansprüche, wobei die Lamellen (27) drehfest mit den jeweiligen inneren und äußeren Festkörpergelenken (29, 31) verbunden sind.

5. Vorrichtung (1) nach einem der vorhergehenden Ansprüche, wobei die inneren und/oder die äußeren Festkörpergelenke (29, 31) als Blattfedern bzw. Biegefedern ausgebildet sind, wobei die Festkörpergelenke (29, 31) vorzugsweise aus einer Titanlegierung gebildet sind.

6. Vorrichtung (1) nach einem der vorhergehenden Ansprüche, wobei die Vorrichtung (1) einen Antrieb umfasst, wobei der Antrieb vorzugsweise ein Linearantrieb ist und die Drehung des inneren Rings (7) und des äußeren Rings (5) relativ zueinander durch eine Längenänderung des Linearantrieb es erzeugt wird, wobei der Linearantrieb vorzugsweise an dem inneren Ring (7) und weiter bevorzugt an einem Antriebsvorsprungs (35) des inneren Rings (7) angreift.

7. Vorrichtung (1) nach einem der vorgehenden Ansprüche, wobei die inneren und äußeren Festkörpergelenke (29, 31) so ausgebildet sind, dass die Festkörpergelenke (29, 31) bei elastischer Verformung durch Drehung des äußeren Rings (5) und des inneren Rings (7) relativ zueinander zur Änderung der Zentralöffnung (3) als Rückstellfeder wirken, so dass die inneren und äußeren Festkörpergelenke (29, 31) stets darauf hinwirken, dass der innere Ring (7) und der äußere Ring (5) durch eine Rückstellkraft der von den Festkörpergelenken (29, 31) gebildeten Rückstellfeder relativ zueinander in eine Ausgangsorientierung gedreht werden.

8. Vorrichtung (1) nach einem der vorhergehenden Ansprüche, wobei die Zentralöffnung (3) in der Ausgangsorientierung maximal geöffnet oder maximal geschlossen ist.

9. Vorrichtung (1) nach Anspruch 8, sofern abhängig von Anspruch 6, wobei der Antrieb so ausgebildet ist, dass der Antrieb ausschließlich die Drehung des inneren Rings (7) und des äußeren Rings (5) relativ zueinander entgegen der Rückstellkraft der von Festkörpergelenken (29, 31) gebildeten Rückstellfeder bewirkt und die Drehung des inneren Rings (5) und des äußeren Rings (7) relativ zueinander im Übrigen alleine durch die Rückstellkraft der von den Festkörpergelenken (29, 31) gebildeten Rückstellfeder bewirkt wird.

10. Vorrichtung (1) nach einem der vorhergehenden Ansprüche, wobei die inneren Festkörpergelenke (29) einstückig mit dem inneren Ring (7) ausgebildet sind und/oder wobei die äußeren Festkörpergelenke (31) einstückig mit dem äußeren Ring (5) ausgebildet sind.

11. Vorrichtung (1) nach einem der vorhergehenden Ansprüche, wobei auf einer oder mehreren der Lamellen (27) Kühlelemente (33) angeordnet sind, um von absorbierter Strahlung erzeugte Wärme abzuführen.

12. Vorrichtung (1) nach einem der vorhergehenden Ansprüche, wobei die Zentralöffnung (3) stufenlos einstellbar ist.

13. Verwendung einer Vorrichtung (1) nach einem der vorhergehenden Ansprüche im Ultrahochvakuum, UHV, und/oder einer partikelarmen Umgebung (wie beispielsweise einem Reinraum).

14. Verwendung nach Anspruch 13, wobei die Vorrichtung (1) als optische Apertur oder zu einer Begrenzung eines Querschnitts eines Elektronenstrahls oder eines anderen Teilchenstrahls verwendet wird.

15. Verwendung nach Anspruch 13, wobei die Vorrichtung (1) als Greifwerkzeug verwendet wird.

## Claims

1. A device (1) with an adjustable central opening (3), wherein the device (1) comprises an outer ring (5) and an inner ring (7), wherein the inner ring (7) is held in the outer ring (5) so as to be rotatable by a roller bearing (9),
wherein the device (1) comprises at least two lamellae (27), which are each connected to the outer ring (5) by an outer flexure bearing (31) and are each connected to the inner ring (7) by an inner flexure bearing (29),
wherein the device (1) is designed so that the central opening (3) is adjusted by rotating the inner ring (7) and the outer ring (5) relative to each other, **characterized in that**
the outer flexure bearings (31) and the inner flexure bearings (29) are elastically deformed by the rotation and the lamellae (27) are moved into the central opening (3) or, respectively, out of the central opening (3) by the deformation of the inner and outer flexure bearings (29, 31), whereby the central opening is adjusted (3).

2. The device (1) according to claim 1, wherein the outer ring (5) is formed by a first and a second ring element (23, 25), wherein an outer guide (13) of the roller bearing (9) is designed between the first ring element (23) and the second ring element (25), wherein an inner guide (15) of the roller bearing (9) is designed on a surface of the inner ring (7), and wherein a plurality of rolling elements (17) of the roller bearing (9) are held between the outer guide (13) and the inner guide (15),
wherein preferably a bearing cage (21) for the plurality of bearing elements (17) is arranged between the inner guide (15) and the outer guide (13), wherein the bearing cage (21) is preferably formed from polyether ether ketone, PEEK.

3. The device (1) according to claim 1 or 2, wherein the device (1) comprises four lamellae (27), wherein a first and a second lamella (27) of the four lamellae (27) are each connected to the outer ring (5) on a first side by the outer flexure bearing (31) and wherein a third and a fourth lamella (27) of the four lamellae (27) are each connected to the outer ring (5) on a second side by the outer flexure bearing (31), wherein the first side of the outer ring (5) is located opposite the second side of the outer ring (5).

4. The device (1) according to one of the preceding claims, wherein the lamellae (27) are connected in a rotationally fixed manner to the respective inner and outer flexure bearings (29, 31).

5. The device (1) according to one of the preceding claims, wherein the inner and/or the outer flexure bearings (29, 31) are designed as leaf springs or, respectively, bending springs, wherein the flexure bearings (29, 31) are preferably formed from a titanium alloy.

6. The device (1) according to one of the preceding claims, wherein the device (1) comprises a drive, wherein the drive is preferably a linear drive and the rotation of the inner ring (7) and the outer ring (5) relative to each other is generated by a change in length of the linear drive, wherein the linear drive preferably engages on the inner ring (7) and more preferably on a drive protrusion (35) of the inner ring (7).

7. The device (1) according to one of the preceding claims, wherein the inner and outer flexure bearings (29, 31) are designed so that the flexure bearings (29, 31), upon elastic deformation due to rotation of the outer ring (5) and the inner ring (7) relative to each other, act as return springs to change the central opening (3), so that the inner and outer flexure bearings (29, 31) always act such that the inner ring (7) and the outer ring (5) are rotated relative to each other into a starting orientation by a return force of the return springs formed by the flexure bearings (29, 31).

8. The device (1) according to one of the preceding claims, wherein the central opening (3) is maximally opened or maximally closed in the starting orientation.

9. The device (1) according to claim 8, when dependent on claim 6, wherein the drive is designed so that the drive effects exclusively the rotation of the inner ring (7) and the outer ring (5) relative to each other against the return force of the return springs formed by the flexure bearings (29, 31), and the rotation of the inner ring (7) and the outer ring (5) relative to each other is otherwise effected solely by the return force of the return springs formed by the flexure bearings (29, 31).

10. The device (1) according to one of the preceding claims, wherein the inner flexure bearings (29) are designed integrally with the inner ring (7) and/or wherein the outer flexure bearings (31) are designed integrally with the outer ring (5).

11. The device (1) according to one of the preceding claims, wherein cooling elements (33) are arranged on one or more of the lamellae (27) in order to dissipate heat generated by absorbed radiation.

12. The device (1) according to one of the preceding claims, wherein the central opening (3) can be steplessly adjusted.

13. A use of a device (1) according to one of the preceding claims in an ultrahigh vacuum, UHV, and/or a low-particle environment (such as a clean room).

14. The use according to claim 13, wherein the device (1) is used as an optical aperture or to limit a cross-section of an electron beam or another particle beam.

15. The use according to claim 13, wherein the device (1) is used as a gripping tool.

## Revendications

1. Dispositif (1) avec une ouverture centrale réglable (3), le dispositif (1) comprenant un anneau extérieur (5) et un anneau intérieur (7), l'anneau intérieur (7) étant maintenu de façon pivotante dans l'anneau extérieur (5) au moyen d'un palier à roulement (9),
le dispositif (1) comprenant au moins deux lamelles (27), lesquelles sont respectivement reliées à l'anneau extérieur (5) par une articulation à corps solide extérieure (31) et respectivement reliées à l'anneau intérieur (7) par une articulation à corps solide intérieure (29),
le dispositif (1) étant conçu de telle sorte que l'ouverture centrale (3) est réglée par une rotation de l'anneau intérieur (7) et de l'anneau extérieur (5) l'un par rapport à l'autre, **caractérisé en ce que**
les articulations à corps solide extérieures (31) et les articulations à corps solide intérieures (29) sont déformées élastiquement par la rotation, et **en ce que**, par la déformation des articulations à corps solide intérieures et extérieures (29, 31), les lamelles (27) peuvent être entrées dans l'ouverture centrale (3) ou sorties de l'ouverture centrale (3), réglant ainsi l'ouverture centrale.

2. Dispositif (1) selon la revendication 1, l'anneau extérieur (5) étant formé d'un premier et d'un deuxième élément annulaire (23, 25), un guide extérieur (13) du palier à roulement (9) étant conçu entre le premier élément annulaire (23) et le deuxième élément annulaire (25), un guide intérieur (15) du palier à roulement (9) étant conçu sur une surface de l'anneau intérieur (7) et une pluralité d'éléments roulants (17) du palier à roulement (9) étant maintenus entre le guide extérieur (13) et le guide intérieur (15),
une cage de roulement (21) pour la pluralité d'éléments roulants (17) étant disposée de préférence entre le guide intérieur (15) et le guide extérieur (13), la cage de roulement (21) étant formée de préférence en polyétheréthercétone, PEEK.

3. Dispositif (1) selon la revendication 1 ou 2, le dispositif (1) comprenant quatre lamelles (27), une première et une deuxième lamelles (27) parmi les quatre lamelles (27) étant respectivement reliées à l'anneau extérieur (5) sur un premier côté par l'articulation à corps solide extérieure (31), et une troisième et une quatrième lamelles (27) parmi les quatre lamelles (27) étant respectivement reliées à l'anneau extérieur (5) par l'articulation à corps solide extérieure (31) sur un deuxième côté, le premier côté de l'anneau extérieur (5) étant opposé au deuxième côté de l'anneau extérieur (5).

4. Dispositif (1) selon l'une des revendications précédentes, les lamelles (27) étant reliées de façon solidaire en rotation aux articulations à corps solide intérieure et extérieure respectives (29, 31).

5. Dispositif (1) selon l'une des revendications précédentes, les articulations à corps solide intérieures et extérieures (29, 31) étant conçues comme des ressorts à lames ou des ressorts de flexion, les articulations à corps solide (29, 31) étant formées de préférence dans un alliage de titane.

6. Dispositif (1) selon l'une des revendications précédentes, le dispositif (1) comprenant un entraînement, l'entraînement étant de préférence un entraînement linéaire et la rotation de l'anneau intérieur (7) et de l'anneau extérieur (5) l'un par rapport à l'autre étant produite par une modification de longueur de l'entraînement linéaire, l'entraînement linéaire s'engageant de préférence sur l'anneau intérieur (7) et plus préférablement sur une saillie d'entraînement (35) de l'anneau intérieur (7).

7. Dispositif (1) selon l'une des revendications précédentes, les articulations à corps solide intérieures et extérieures (29, 31) étant conçues de telle sorte que les articulations à corps solide (29, 31) agissent comme un ressort de rappel lors de la déformation élastique par rotation de l'anneau extérieur (5) et de l'anneau intérieur (7) l'un par rapport à l'autre pour modifier l'ouverture centrale (3), de telle sorte que les articulations à corps solide intérieures et extérieures (29, 31) agissent toujours pour que l'anneau intérieur (7) et l'anneau extérieur (5) soient pivotés l'un par rapport à l'autre dans une orientation initiale, par une force de rappel du ressort de rappel formé par les articulations à corps solide (29, 31).

8. Dispositif (1) selon l'une des revendications précédentes, l'ouverture centrale (3) étant ouverte au maximum ou fermée au maximum dans l'orientation initiale.

9. Dispositif (1) selon la revendication 8, lorsqu'elle dépend de la revendication 6, l'entraînement étant conçu de telle sorte que l'entraînement provoque uniquement la rotation de l'anneau intérieur (7) et de l'anneau extérieur (5) l'un par rapport à l'autre de façon opposée à la force de rappel du ressort de rappel formé par les articulations à corps solide (29, 31) et la rotation de l'anneau intérieur (7) et de l'anneau extérieur (5) l'un par rapport à l'autre étant par ailleurs provoquée uniquement par la force de rappel du ressort de rappel formé par les articulations à corps solide (29, 31).

10. Dispositif (1) selon l'une des revendications précédentes, les articulations à corps solide intérieures (29) étant conçues d'une seule pièce avec l'anneau intérieur (7) et/ou les articulations à corps solide extérieures (31) étant conçues d'une seule pièce avec l'anneau extérieur (5).

11. Dispositif (1) selon l'une des revendications précédentes, des éléments de refroidissement (33) étant disposés sur une ou plusieurs des lamelles (27) pour dissiper la chaleur générée par le rayonnement absorbé.

12. Dispositif (1) selon l'une des revendications précédentes, l'ouverture centrale (3) étant réglable en continu.

13. Utilisation d'un dispositif (1) selon l'une des revendications précédentes dans l'ultravide, UHV, et/ou dans un environnement à faible taux de particules (comme une salle blanche, par exemple).

14. Utilisation selon la revendication 13, le dispositif (1) étant utilisé comme ouverture optique ou pour une limitation d'une section d'un faisceau d'électrons ou d'un autre faisceau de particules.

15. Utilisation selon la revendication 13, le dispositif (1) étant utilisé comme outil de préhension.
